## Europäisches Patentamt

**European Patent Office**

**Office européen des brevets**

(11) Publication number: **0 100 680**
**B1**

(12) **EUROPEAN PATENT SPECIFICATION**

(45) Date of publication of patent specification: **04.02.87**

(21) Application number: **83304460.5**

(22) Date of filing: **02.08.83**

(51) Int. Cl.⁴: **B 60 S 3/04**

(54) **Cleaning apparatus.**

(30) Priority: **02.08.82 GB 8222249**
**21.01.83 GB 8301769**

(43) Date of publication of application:
**15.02.84 Bulletin 84/07**

(45) Publication of the grant of the patent:
**04.02.87 Bulletin 87/06**

(84) Designated Contracting States:
**AT BE CH DE FR GB IT LI LU NL SE**

(56) References cited:
**DE-A-2 459 959**
**DE-U-1 788 443**
**GB-A-1 571 801**

(73) Proprietor: **CHASSIJET LIMITED**
**25, Mere Street**
**Stratford-Upon-Avon, CV37 6QB Warwickshire**
**(GB)**

(72) Inventor: **Gilliam, David Tovey**
**Tile Barn Hampton Lucy**
**Nr. Warwick Warwickshire, CV35 8BQ (GB)**

(74) Representative: **Adkins, Michael et al**
**Withers & Rogers 4 Dyer's Buildings**
**Holborn London, EC1N 2JT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to cleaning apparatus and is particularly but not exclusively concerned with apparatus for cleaning the underside of a vehicle.

In known apparatus for cleaning the underside of a vehicle it is normal to utilise a carriage which moves beneath the vehicle and which directs cleansing fluid at the underside of the vehicle. The fluid is fed through a flexible conduit coiled around a drum which will pay out or wind in the conduit as the carriage moves. One example of such known apparatus is disclosed in DE—A—2 459 959. However, the use of a drum creates problems because the fluid must be fed from a stationary supply and rotary seals are necessary in the feed line between the supply and the drum. Such seals require frequent replacement. Also without using somewhat complex and expensive seal systems high pressures, e.g. over 100 Atmospheres, cannot be applied to the cleaning fluid. As a result of maximum working pressure of such systems is somewhat limited. One object of the present invention is to provide apparatus having an improved system for feeding fluid to the carriage.

According to one aspect of the invention there is provided cleaning apparatus comprising a carriage, means on said carriage for directing fluid at an object such as a vehicle, drive means for moving the carriage relative to said object and a flexible conduit for feeding said fluid to the carriage characterised in that the conduit passes around a movable support intermediate its ends to form during travel of the carriage a first run between the supply and the support and a second run between the support and the carriage, and in that the support is a pulley through which drive can be transmitted to the carriage.

By arranging the conduit in the manner set out in the immediately preceding paragraph it is unnecessary to coil the conduit around a drum as hitherto and the use of rotary seals is thereby avoided.

Preferably said first and second runs are substantially linear and lie alongside each other. At any instant throughout the movement of the carriage the majority of the conduit is preferably straight.

In a preferred embodiment the pulley is rotatable on a mounting. Drive in one direction may be transmitted from the pulley to the carriage by the flexible conduit.

Preferably a further flexible duct is provided for ducting selected materials to the carriage, said further conduit passing around a further movable support intermediate its ends to form during travel of the carriage a first run between the further supply and the further support and a second run between the further support and the carriage. In such a case the further support may be a pulley through which drive in the opposite direction can be transmitted to the carriage via the further conduit. Said pulleys may be interconnected by a resilient link so that movement of one pulley will be transmitted to the other through the link. In such an arrangement the first conduit will normally supply a cleansing liquid such as water and the further conduit can be used to feed detergent or other additives which are mixed with the water. Electrical cable for supplying power to working parts of the carriage may be housed in either or both of said conduits.

The carriage is preferably movable along a track by said drive means. The supply for the or each conduit may be connected to the conduit or respective conduits at a point substantially midway between the ends of the track and the length of the or each conduit will be less than the distance between the ends of the track. Where the conduit is coiled around a drum in prior art apparatus the drum is arranged at one end of the track and the length of the conduit must always be at least equal to the maximum distance than the carriage can travel along the track away from the drum. Therefore the invention is advantageous in requiring less conduit for a given length of carriage travel.

Drive to the pulleys may be effected by cable means which may comprise a first section connected to one pulley and a further section connected to the further pulley, said cable means being associated with a driving device which draws said first section and simultaneously pays out the second section or vice versa. The cable means may comprise two lengths of cable each of which has one end connected to a winding drum and the other end connected to an associated pulley, said two lengths constituting said first and second sections respectively.

Another object of the present invention is to provide means for controlling the direction in which fluid is directed towards the object.

According to another aspect of the invention there is provided cleaning apparatus comprising a carriage and means on said carriage for directing fluid at an object such as a vehicle characterised in that the means on said carriage is movable relative to said carriage by a rotary drive unit on said carriage. The rotary unit preferably causes the directed fluid to move through an arc. The rotary drive unit is preferably an electric motor which may oscillate the means, e.g. a boom, by means of a crank mechanism. Where the said means is a boom, the boom may be mounted for rotation about its longitudinal axis and abut an axis transverse thereto. The rotation about the transverse axis may be effected by the drive unit by reaction against a resilient reaction member on the carriage so that if the boom is obstructed whilst being driven abut the transverse axis, the reaction member will absorb the driving force.

According to a further aspect of the present invention there is provided cleaning apparatus comprising a carriage and means mounted on said carriage for directing fluid at an object such as a vehicle characterised in that said means is mounted so that reaction from the directed fluid moves the said means relative to the carriage in a controlled manner. Where the means is a boom mounted for rotation about its longitudinal axis and about an axis transverse thereto, the boom is preferably moved about the transverse axis by the reaction of the directed fluid whilst being rotated by the aforesaid rotary drive unit about its longitudinal axis. In such a case the movement of the boom about its longitudinal axis may cause the fluid to be directed through an arc to provide a continuously varying reaction on the boom.

Control of the boom may be effected by a fluid circuit including a member which is driven by the boom and in response to which fluid in the circuit is moved through valve means for controlling movement of the boom due to the reaction of the fluid. The said member may comprise a piston mounted in a cylinder having first and second chambers on respective sides of the piston. Preferably movement of the piston in one direction will cause fluid in one said chamber to flow in a controlled manner through a first valve of said valve means and movement of the piston in the opposite direction will cause fluid to flow in a controlled manner through a second valve of said valve means, fluid from a fluid source being drawn via a non-return valve into one of the chambers as fluid is expelled from the other. The continuously varying reaction will normally create forces tending to urge the boom in alternating directions. In such a case, and with said first valve open and the second valve closed, the boom will move in one direction in a controlled manner under the influence of fluid reaction thereby urging fluid through the first valve but will be prevented by the associated non-return valve from moving in a reverse sense when the reaction reverses. Therefore the boom will move step-wise in one direction until the first valve is closed and the second valve is opened, preferably by timer or proximity means. Opening of the second valve allows the boom to travel step-wise in the opposite direction over a distance determined by said timer or proximity means.

Cleaning apparatus in accordance with the invention will now be described by way of example with reference to the accompanying drawings in which:—

Fig. 1 is a plan view of one form of apparatus in accordance with the invention for cleaning the underside of a vehicle and showing the carriage at a starting position,

Fig. 2 is a view similar to Fig. 1 showing the carriage at a terminal position,

Fig. 3 is a plan view of driving means for the carriage.

Fig. 3A is an elevation of a pulley and mounting,

Fig. 4 is an elevation of the driving means shown in Fig. 3,

Fig. 5 is a plan view of one form of the carriage illustrating a drive unit therein,

Fig. 6 is an end elevation of apparatus in accordance with the invention showing means for cleaning the sides of a vehicle,

Fig. 6A is a view of part of the apparatus of Fig. 6 looking in the direction of arrow Z in Fig. 6,

Fig. 7 is a plan view of an alternative carriage for cleaning apparatus in accordance with the invention, and

Fig. 8 is an end view to a larger scale of part of the carriage of Fig. 6 illustrating a mechanism for turning the boom about its longitudinal axis.

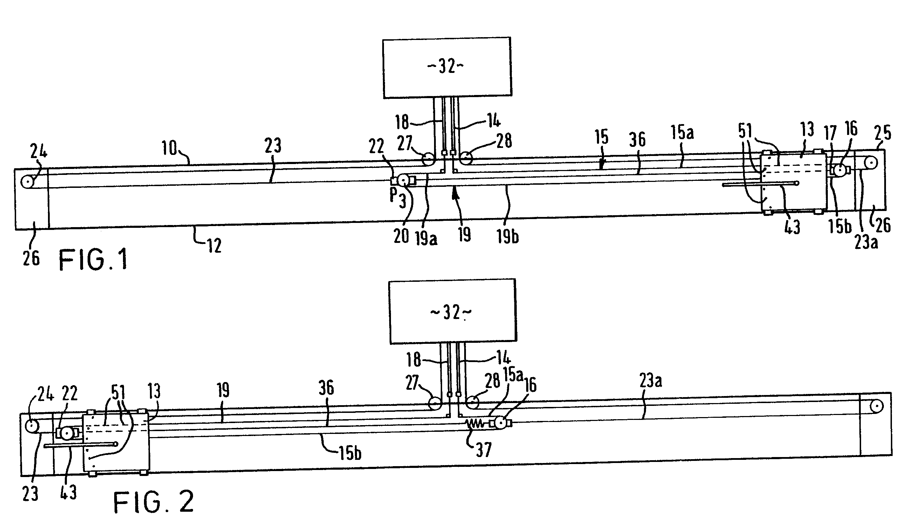

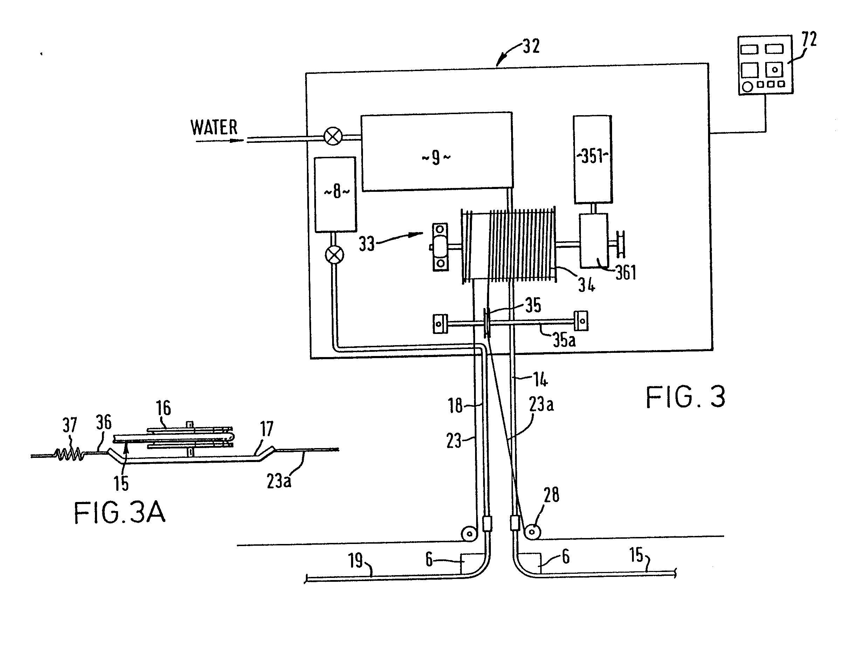

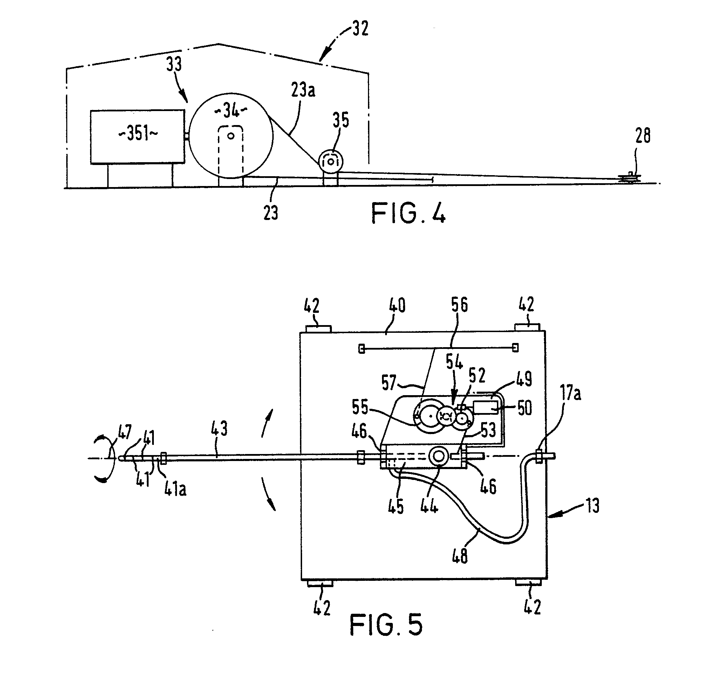

Referring to Figs. 1 to 4 the apparatus includes two rails 10, 12 along which runs a carriage 13. A liquid (e.g. water) supply pipe 14 is connected to a flexible reinforced hose 15. The hose passes around a pulley 16 rotatable on a skid-like mounting 17 (Fig. 3A) and is attached to a connector 17a (Fig. 5) at the right hand end of the carriage as viewed in Fig. 1. A supply pipe 18 for selected materials such as solvent degreasing materials is connected to a flexible reinforced hose 19 which passes around a pulley 20 rotatable on a mounting 22 similar to mounting 17. The hose 19 is attached to a suitable connector (not shown) on the left hand end of the carriage. The pulley mounting 22 is connected to one end of a cable 23 which passes around a pulley 24 on a rail end member 26, around a further pulley 27 and into a housing 32 for drive means 33. The pulley mounting 17 is connected to one end of a cable 23a which passes around a pulley 25 on a further rail end member 26, around another pulley 28 and into the housing 32.

The drive means 33 is shown in detail in Fig. 3 and comprises a drum 34 driven by a motor 351 through gearing 361. The cable 23 is connected to the drum 34 adjacent the left-hand and as viewed in Fig. 3 and the cable 23a is connected to the drum 34 adjacent the right-hand end. The cables are wound in opposite directions on the drum so that as one cable is wound in the other will be payed out. As shown in Fig. 4, cable 23a passes beneath a pulley 35 so as to align the cable substantially with pulley 28. The pulley 35 is axially slidable on a shaft 35a.

The pulley mounting 17 is connected to pulley mounting 22 by a cable 36 and a tension spring 37. The spring 37 is normally loaded so as to maintain tension to the cables 23, 23a.

On driving the drum 34 the cable 23 moves the carriage from its start position in Fig. 1 to its terminal position in Fig. 2. The motor 35 can then be reversed to move the carriage back through cable 23a. The terminal point can be determined by a detector (not shown) which effectively senses the distance travelled by the carriage. The arrangement of pulleys 16, 20 and hoses 15, 19 produces two runs 15a, 15b in hose 15 and two runs 19a, 19b in hose 19. The run 15a extends between the pipe 14 and pulley 16 and run 15b extends between the pulley 16 and the carriage. Run 19 extends between the pipe 18 and the pulley 20 and run 19b extends between the pulley 20 and the carriage. The arrangement also produces relative movement between the pulley mountings 17, 22 and the carriage longitudinally of the rails, the carriage moving twice the speed of the pulley mountings. Moreover the majority of each hose will always be substantially straight at any instant during movement of the carriage whereas in known apparatus a considerable portion of the hose will be coiled around a reel at certain times. The arrangement shown dispenses with the need for a reel and the rotary seals necessary for effecting a watertight rotary joint in the water supply line to the inner end of the hose on the reel. Also the positioning of the supply 14 enables a hose to be used which is considerably shorter than the distance travelled by the carriage. Where a reel mounted hose is provided at one end of the rails in known apparatus the hose must be long enough to enable the carriage to reach the opposite end. As pressure tends to fall in relation to the length of the hose, the shorter hose can be of smaller diameter than those used in known apparatus. That is advantageous from a cost point of view and in that a smaller diameter hose will more easily pass around the pulleys. Drive to the carriage 13 is transmitted from the pulley 20 through hose 19 to draw the carriage to the left in Fig. 1 and from pulley 16 through hose 15 to draw the carriage to the right.

Reference is now made to Fig. 5 which illustrates details of the carriage 13.

The carriage 13 has a chassis 40 carrying wheels 42 which engage the rails 10, 12. A tubular boom 43 is mounted for side-to-side swinging movement about a pivot 44 on the chassis 40. The boom is carried by a mounting 45 which engages the pivot 44. The mounting includes two bearings 46 in which the boom is rotatable about its longitudinal axis indicated at 47. The left hand end of the boom carries jets 41 for spraying liquid fed to the boom by a pipe 48 leading from connector 17a. The mounting 45 has a plate 49 thereon which carries an electric motor 50. The motor drives a crank 52 connected to the boom 43 by a connecting rod 53. Rotation of the crank turns the boom through an arc about its axis 47. A series of gears 54 provides a reduction drive from the motor to a second crank which is connected to a torsion bar 56 on the chassis 40 by a connecting rod 57. Rotation of the crank 55 will oscillate the boom 43 about the pivot 44. However, if the boom meets an obstruction as it oscillates, the crank 55 continues to rotate but the torsion bar 56 twists to absorb the movement thereby preventing an excessive turning load being applied to the boom. Both cranks 52, 55 may have adjustable throws. Electric current for driving the motor 50 is fed through insulated cables passing through the hose 19. As the carriage travels along the rails, the boom 43 oscillates about pivot 44 and turns about axis 47 to spray water against the underside of the vehicle. Detergent, solvents or other materials may be fed to rows of fixed spray jets 51 (Figs. 1 and 2) on the carriage. Additionally detergents can be fed to the boom through the hose 19.

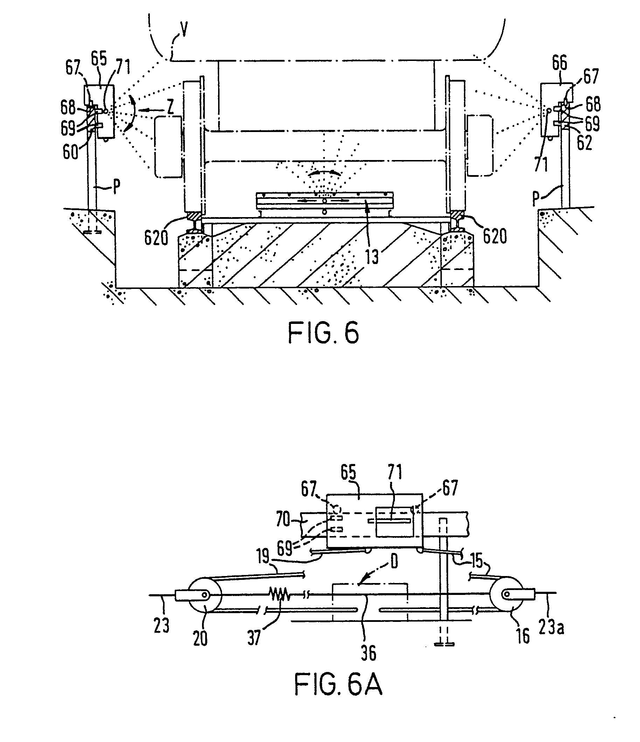

The arrangement illustrated in Figs. 1 to 5 enables the underside of a vehicle to be cleaned. In Figs. 6 and 6A additional rails 60 and 62 are arranged on both sides of a vehicle V which runs on a track such as a locomotive track 620. The rails 60, 62 are arranged on pillars P. The rails support carriages 65, 66 each of which has upper rollers 67 which roll in a groove 68 in the upper edge of the associated track, and side rollers 69 which roll along a side face 70 of each track. Each carriage has a boom 71 formed with jets for spraying liquid and the boom is oscillated about its longitudinal axis by a rotary drive unit (not shown) for example of a type similar to that used to oscillate the boom of Fig. 5. Water and solvent are fed to the carriage through hoses 15, 19 in a manner similar to Figs. 1 and 2, the hoses passing around pulleys 16, 20 which may lie in vertical or horizontal planes or in inclined planes. The pulleys are drawn along by cables 23, 23a from a main drive unit D and are interconnected through cable 36 and tension spring 37 as in Figs. 1 and 2. Movement of the cables causes the carriages to travel along the rails and spray the chassis sides of vehicle V. The solvent etc. may be sprayed through unshown jets on the carriages or may be mixed with the water.

Preferably the cleaning apparatus in accordance with the invention is controlled by a microprocessor as described below.

With the apparatus in position, the carriage is initially run manually along the rails by using a control panel 72 (Fig. 3). Where excessive dirt accumulations are likely, e.g. around axles, the carriage is stopped for an appropriate time or moved incrementally for a desired period before continuing its normal travel. At desired points, detergent or solvent can be added again by operating the control panel. The control signals are recorded by the memory of the microprocessor and the cycle can be repeated automatically for similar vehicles by switching from manual to automatic on the control panel. The cycle may begin by moving the carriage from the Fig. 1 to the Fig. 2 position or to an intermediate position beneath the vehicle with the boom in a central position and possibly spraying detergent/solvents through jets 51 from a source 8. At its limit of travel the drive reverses and draws the carriage back along the rails. As the carriage moves back water is sprayed at the underside of the vehicle at high pressure e.g. 100 to 140 Atmospheres, the pressure being provided by a pump 9 (Fig. 3). To ensure thorough cleansing, the carriage may be programmed to move over a given distance and then stop for a predetermined time. The distance and/or dewll time can be varied in the program to suit the cleaning requirements of different parts of the vehicle. By moving the carriage incrementally in that manner the cleaning is particularly effective. When it arrives back at Fig. 1 position, the boom 43 should be positioned as shown in Fig. 5 and a suitable sensor, e.g. a magnetic or electrical sensor system, may be provided for ensuring that the motor 50 will continue to run until boom reaches the central position whereupon the motor will be switched off. With water being sprayed at the high pressures set out above, there will be a reaction force set up in the boom. However, a damper (not shown) may be provided which will prevent random oscillations of the boom as a result. As described below the reaction may in fact be utilised to drive a boom.

The boom may be removable so that it can be replaced by a boom of different length. Also the jets 41 are preferably formed in a detachable end member 41a which can be unscrewed from the boom and replaced by an alternative type for cleaning.

The hoses 15, 19 preferably pass around quadrant member 6 adjacent their inlet ends, the quadrants 6 being mounted on sleepers or an extension of housing 32.

Where side spraying carriages 65, 66 are used as in Figs. 6 and 6A, with boom 71, the carriages can be controlled by the same microprocessor so that when the carriage 13 (arranged beneath the vehicle V in Fig. 6) has completed its run, the carriages 65, 66 can be set in motion to spray the sides of the vehicle in accordance with instructions which are initially determined by manual operation of the carriages 65, 66. The same water and detergent feeds 14, 18 used for carriage 13 could be used for the carriages 65, 66 by utilising electrically operable valves and the carriages 65, 66 could be operated simultaneously or one after the other. Each of the carriages 65, 66 may be arranged to operate independently of the other.

The memory retaining the program which may be introduced by the user is preferably of the EPROM type.

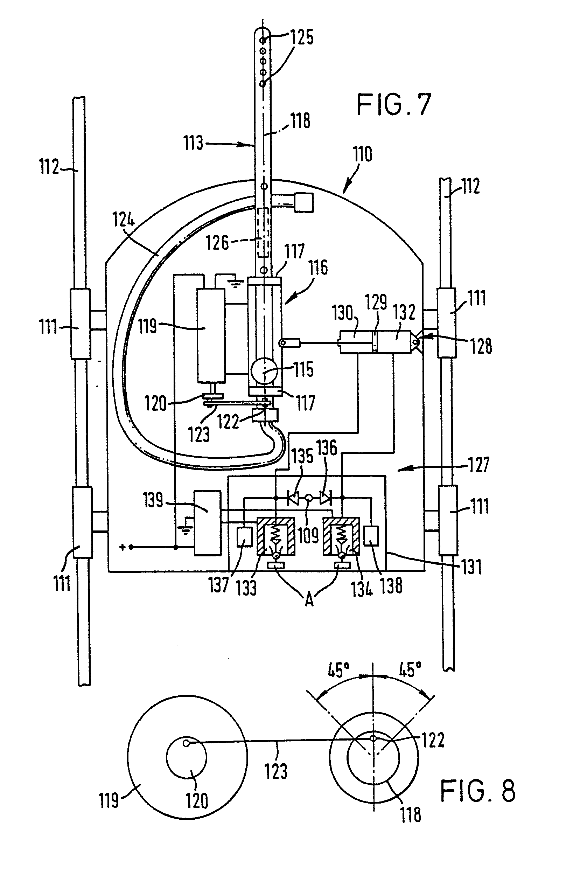

Reference is now made to Figs. 7 and 8 which illustrate an alternative type of carriage.

The carriage 110 has wheels 111 which run along rails 112 beneath a vahicle or other object to be cleaned. The carriage may be drawn along the rails by cable means similar to that described above although alternative driving means may be used.

The carriage supports a boom 113 which comprises an elongate tube mounted for side-to-side swinging movement about a vertical pivot 115 on the carriage. The boom is arranged in a mounting 116 on the pivot 115. The mounting includes two bearings 117 in which the boom is rotatable about its longitudinal axis 118. The mounting 116 supports an electric motor 119 which turns a crank 120. The crank 120 is connected to an eccentric pin 122 on the boom through a connecting rod 123. Rotation of the crank 120 oscillates the boom through an arc (e.g. through 90° — i.e. 45° on each side of the vertical) about the axis 118. Alternatively the boom can be oscillated by a solenoid device or fluid operable means. The end of the boom adjacent the pivot 115 is connected to a liquid supply line 124 which receives cleansing liquid such as water from a hose (not shown) preferably in a manner similar to that described above. The liquid passes through the boom under the required pressure and is expelled from the free end of the boom through spray jets 125. The expulsion of the liquid through the jets 125 creates a reaction on the boom and once the jets move from the vertical a horizontal reaction componens is created which tends to turn the boom about the pivot 115. The horizontal component increases as the jets approach the horizontal. At least one tension spring 126 extends between the boom and a fixed pivot on the carriage and continuously biases the boom to the central position shown.

Side-to-side arcuate movement of the boom about pivot 115 is controlled by a fluid circuit 127 which includes a cylinder 128 and piston 129. The cylinder 128 is pivotally mounted on the carriage 110. The piston 129 is pivotally connected to the boom mounting 116 and divides the cylinder into two chambers 130, 132. The chamber 130 is connected to a solenoid-operable flow control valve 133 and the chamber 132 is connected to a similar flow control valve 134. The valves 133, 134 can be adjusted by means indicated at A to adjust flow rate therethrough. Fluid passing through the valves 133, 134 is fed to a reservoir 131. Respective pressure relief valves 137, 138 are provided and communicate with the chambers 130, 132. A timer 139 is provided to control the "open" and "closed" times for the flow control valves 133, 134. Opposed non-return valves 135, 136 are arranged between chambers 130 and 132 respectively and a feed 109 from reservoir 131.

In use with the boom 113 initially in the position shown and with the flow control valve 133 open and suitably adjusted, the liquid is fed under pressure to the boom and the motor 119 initially turns the boom, say, clockwise about its axis 118. An increasing horizontal component of reaction then urges the boom anticlockwise about the pivot 115 and draws the piston 129 to the left. Fluid in chamber 130 is thereby expelled from the chamber 130 to the reservoir 131 at a rate controlled by valve 133. Simultaneously, fluid is drawn into chamber 132 through valve 136. The boom 113 is being oscillated by the motor 119 and the reaction beings to decrease as the boom eventually begins to move anticlockwise about its axis 118 but towards the position shown in Fig. 7. As the boom and hence the jets move over centre about axis 118 an increasing horizontal reaction in the opposite direction tries to force the boom in a clockwise sense about the pivot 115. However, fluid is unable to pass from the chamber 132 to the reservoir through valve 134, if this is closed, or through non-return valve 136. Therefore the boom remains stationary, whilst the jets move sufficiently overcentre again to provide a horizontal reaction seeking to move the boom clockwise when valve 134 is opened by timer 139. Alternatively at the end of the desired horizontal arc of clockwise movement of the boom about pivot 115, the timer 139 closes the valve 133 and opens valve 134. The boom then moves back under the influence of reaction forces as before so that fluid from chamber 132 passes through control valve 134 and fluid is drawn into chamber 130 through valve 135. Clockwise incremental movement of the boom continues until the timer 139 closes valve 134 to limit the horizontal arc of clockwise movement of the boom about the pivot 115. The controlled incremental movement of the boom is advantageous in that the boom can remain stationary for a short period whilst liquid is being forced through the jets thereby ensuring thorough cleaning of the vehicle concerned during the dwell times.

In the event that the boom strikes part of the vehicle being cleaned during movement of the chassis along the rails so that the boom is moved forcibly about the pivot 115, the appropriate pressure relief valve 137, 138 can relieve pressure in the associated cylinder chamber to prevent pressure overload.

In a typical apparatus it is expected that a maximum reaction of approximately 20 lb (9 kg) will be created by the cleansing liquid at a delivery pressure of around 140 atmospheres. The reaction and pressure figures will normally vary depending on the size of the apparatus.

The return spring or springs 126 ensure that boom 113 will always return to the centre position shown when the liquid supply is turned off and with the control valves 133, 134 open.

It is envisaged that the control valves 133, 134 may be adjusted by remote control means so that the rate of side to side movement of the boom can be varied appropriately as the carriage moves along the rails.

**Claims**

1. Cleaning apparatus comprising a carriage (13, 65, 66, 110), means (43, 71, 113) on said carriage for directing fluid at an object such as a vehicle (V), drive means (33) for moving the carriage relative to said object and a flexible conduit (14) for feeding said fluid to the carriage characterised in that the conduit (14) passes around a movable support (16) intermediate its ends to form during travel at the carriage a first run (15a) between the supply and the support and a second run (15b) between the support (16) and the carriage (13, 65, 66, 110), and in that the support (16) is a first pulley through which drive can be transmitted to the carriage.

2. Cleaning apparatus according to Claim 1 characterised in that drive is transmitted from said first pulley (16) to the carriage (13, 65, 66, 110) by the flexible conduit (14).

3. Cleaning apparatus according to Claim 1 or Claim 2 characterised in that a further flexible conduit (18) is provided for ducting selected materials to the carriage (13, 65, 66, 110), said further conduit (18) passing around a further movable support (20) intermediate its ends to form during travel of the carriage a first run (19a) between the further supply and the further support (20) and a second run (19b) between the further support (20) and the carriage (13, 65, 66, 110).

4. Cleaning apparatus according to Claim 3 when appendant to Claim 2 characterised in that the further support (20) is a further pulley through which drive can be transmitted to the carriage (13, 65, 66, 110) via the further conduit (18), said pulleys (16, 20) being interconnected by a resilient link (36, 37) so that movement of one pulley will be transmitted to the other through the link.

5. Cleaning apparatus according to Claim 4 characterised in that drive to the pulley is effected by cable means (23) comprising a first section (23a) connected to said first pulley (16) and a further section (23b) connected to the said further pulley (20), said cable means (23) being associated with drive means (33) which draws said first section (23a) and simultaneously pays out the second section (23b) or vice versa.

6. Cleaning apparatus according to any preceding Claim characterised in that said means (43, 71, 113) on the carriage (13, 65, 66, 110) for directing jets of fluid at the object comprises a member which is rotatable about an axis by rotary drive means (50, 119) on the carriage.

7. Cleaning apparatus according to any preceding Claim in which the means (43, 71, 113) on the carriage for directing fluid towards the object is mounted so that reaction from the directed fluid moves the said means (43, 71, 113) relative to the carriage in a controlled manner.

8. Cleaning apparatus comprising a carriage and means on said carriage for directing fluid at an object such as a vehicle characterised in that the means on said carriage is movable relative to said carriage by a rotary drive unit (50, 119) on said carriage.

9. Cleaning apparatus comprising a carriage and means mounted on said carriage for directing fluid at an object such as a vehicle characterised in that said means is mounted so that reaction from the directed fluid moves the said means relative to the carriage in a controller manner.

**Patentansprüche**

1. Waschvorrichtung mit einem Trägerwagen (13, 65, 66, 110), auf diesem Trägerwagen angeordneten Mitteln (43, 47, 113) zum Spritzen von Flüssigkeit gegen ein Objekt, beispielsweise ein Fahrzeug (V), Antriebsmitteln (33) zum Bewegen des Trägerwagens relativ zu dem Objekt und einer flexiblen Leitung (14) zum Zuführen der Flüssigkeit zu dem Trägerwagen, dadurch gekennzeichnet, daß die Leitung (14) zwischen ihren Enden so um eine bewegliche Seilrolle (16) gelegt ist, daß während der Fahrt des Trägerwagens (13, 65, 66, 110) ein erstes Trum (15a) zwischen der Flüssigkeitszuführung und der Seilrolle (16) und einem zweiten Trum (15b) zwischen der Seilrolle (16) und dem Trägerwagen (13, 65, 66, 110), gebildet ist, wobei die Seilrolle (16) einen ersten Rollenblock darstellt, durch welchen ein Antrieb auf den Trägerwagen (13, 65, 66, 110) übertragbar ist.

2. Waschvorrichtung nach Anspruch 1, dadurch gekennzeichnet, daß der auf die erste Seilrolle (16) übertragene Antrieb des Trägerwagens (13, 65, 66, 110) über die flexible Leitung (14) erfolgt.

3. Waschvorrichtung nach den Ansprüchen 1 oder 2, dadurch gekennzeichnet, daß eine weitere flexible Leitung (18) vor gesehen ist, um vorbestimmte Materialien gegen den Trägerwagen (13, 65, 66, 110) zu leiten, wobei diese weitere flexible Leitung (18) so um eine weitere drehbare Seilrolle (20) gelegt ist, daß während der Fahrt des Trägerwagens zwischen ihren Enden ein erstes Trum (19a) zwischen einer weiteren Zuführung und der weiteren Seilrolle (20) und ein zweites Trum (19b) zwischen der weiteren Seilrolle (20) und dem Trägerwagen (13, 65, 66, 110) gebildet ist.

4. Waschvorrichtung nach den Ansprüchen 2 und 3, dadurch gekennzeichnet, daß die weitere Seilrolle (20) ein weiterer Rollenblock ist, mit dem mittels der weitere Leitung (18) eine Antriebskraft auf den Trägerwagen (13, 15, 65, 66, 110) übertragbar ist, wobei die Seilrollen (16, 20) durch ein elastisches Verbindungsstück (36, 37) so miteinander verbunden sind, daß die Bewegung einer der Seilrollen (16, 20) durch das Verbindungsstück (36, 37) auf die andere übertragen werden kann.

5. Waschvorrichtung nach Anspruch 4, dadurch gekennzeichnet, daß der Antrieb zu den Seilrollen (16, 20) von einem Seilzug (23) ausgeübt wird, der aus einer ersten, mit der ersten Seilrolle (16) verbundenen Sektion (23a) und einer weiteren, mit der weiteren Seilrolle (20) verbundenen Sektion (23b) besteht, wobei dem Seilzug (23) ein Antriebsmittel (33) so zugeordnet ist, daß beim Anziehen der ersten Sektion (23a) simultan der zweite Sektion (23b) nachgegeben wird und umgekehrt.

6. Waschvorrichtung nach einem oder mehreren der vorhergehenden Ansprüche, dadurch gekennzeichnet, daß die auf dem Trägerwagen (13, 65, 66, 110) angeordneten Mittel zum Spritzen eines Flüssigkeitsstrahls auf das Objekt ein drehbares Glied beinhalten, welches durch Antriebsmittel (50, 119) auf dem Trägerwagen (13, 65, 66, 110) um eine Achse drehbar ist.

7. Waschvorrichtung nach einem oder mehreren der vorstehenden Ansprüche, dadurch gekennzeichnet, daß die auf dem Trägerwagen (13, 65, 66, 110) angeordneten Mittel (43, 71, 113) zum Richten eines Flüssigkeitsstrahls auf das zu reinigende Objekt so angeordnet sind, daß sie mittels der gerichteten Flüssigkeitsstrahlen in kontrollierbare Bewegungen relativ zu dem Trägerwagen (13, 65, 66, 110) versetzbar sind.

8. Waschvorrichtung nach einem oder mehreren der vorstehenden Ansprüche, mit einem Trägerwagen und auf diesem Trägerwagen angeordnete Mittel zum Richten eines Flüssigkeitsstrahls auf ein zu reinigendes Objekt, beispielsweise ein Fahrzeug, dadurch gekennzeichnet, daß die Mittel zum Richten des Flüssigkeitsstrahls durch einen Drehantrieb (50, 119) auf dem Trägerwagen relativ zu diesem drehbar sind, wobei sich der Drehantrieb ebenfalls auf dem Trägerwagen befindet.

9. Waschvorrichtung, bestehend aus einem Trägerwagen und auf diesem Trägerwagen aufmontierten Mitteln zum Richten eines Flüssigkeitsstrahls auf ein Objekt, beispielsweise ein Fahrzeug, dadurch gekennzeichnet, daß diese Mittel zum Richten eines Flüssigkeitsstrahls so montiert sind, daß der Rückstoß der gerichteten Flüssigkeitsstrahlen sie in kontrollierbarer Weise in eine Drehbewegung relativ zu dem Trägerwagen versetzt.

## Revendications

1. Appareil de nettoyage comprenant un chariot (13, 65, 66, 110), des moyens (43, 71, 113) sur le chariot pour diriger un fluide vers un objet tel qu'un véhicule (V), des moyens d'entraînement (33) pour déplacer le chariot relativement à cet objet et un conduit flexible (14) pour amener le fluide au chariot, caractérisé en ce que le conduit (14) passe autour d'un support mobile (16), en un point intermédiaire entre ses extrémités, de manière à former, lors du déplacement du chariot, un premier brin (15a) entre l'alimentation et le support et un second brin (15b) entre le support (16) et le chariot (13, 65, 66, 110), et en ce que le support (16) est une première poulie par l'intermédiaire de laquelle la commande de déplacement peut être transmise au chariot.

2. Appareil de nettoyage selon la revendication 1, caractérisé en ce que la commande de déplacement est transmise de la première poulie (16) au chariot (13, 65, 66, 110) par le conduit flexible (14).

3. Appareil de nettoyage selon la revendication 1 ou la revendication 2, caractérisé en ce qu'un conduit flexible supplémentaire (18) est prévu pour amener des produits sélectionnés au chariot (13, 65, 66, 110), ce conduit supplémentaire (18) passant autour d'un autre support mobile (20), en un point intermédiaire entre ses extrémités, de manière à former, lors du déplacement du chariot, un premier brin (19a) entre l'alimentation supplémentaire et l'autre support (20) et un second brin (19b) entre cet autre support (20) et le chariot (13, 65, 66, 110).

4. Appareil de nettoyage selon la revendication 3 rattachée à la revendication 2, caractérisé en ce que l'autre support (20) est une autre poulie par l'intermédiaire de laquelle la commande de déplacement peut être transmise au chariot (13, 65, 66, 110), en passant par le conduit supplémentaire (18), les poulies (16, 20) étant reliées entre elles par un lien élastique (36, 37) de telle sorte que le mouvement d'une poulie est transmis à l'autre par le lien.

5. Appareil de nettoyage selon la revendication 4, caractérisé en ce que l'entraînement des poulies est assuré par des moyens à câble (23) comprenant un premier tronçon (23a) relié à la première poulie (16) et un autre tronçon (23b) relié à l'autre poulie (20), ces moyens à câble (23) étant associés à des moyens d'entraînement (33) qui tirent le premier tronçon (23a) et simultanément dévident le second tronçon (23b), ou vice-versa.

6. Appareil de nettoyage selon l'une quelconque des revendications précédentes, caractérisé en ce que les moyens (43, 71, 113) prévus sur le chariot (13, 65, 66, 110) pour diriger des jets de fluide vers l'objet comprennent un organe qui est monté tournant autour d'un axe et actionné par des moyens d'entraînement en rotation (50, 119) portés par le chariot.

7. Appareil de nettoyage selon l'une quelconque des revendications précédentes, dans lequel les moyens (43, 71, 113) prévus sur le chariot pour diriger un fluide vers l'objet sont montés de telle sorte que la réaction du fluide éjecté déplace ces moyens (43, 71, 113) relativement au chariot d'une manière contrôlée.

8. Appareil de nettoyage comprenant un chariot et, sur ce chariot, des moyens pour diriger un fluide vers un objet tel qu'un véhicule, caractérisé en ce que lesdits moyens, prévus sur le chariot, sont déplaçables relativement à ce chariot par une unité d'entraînement en rotation (50, 119) portée par ledit chariot.

9. Appareil de nettoyage comprenant un chariot et des moyens montés sur le chariot pour diriger un fluide vers un objet tel qu'un véhicule, caractérisé en ce que lesdits moyens sont montés de telle sorte que la réaction du fluide éjecté déplace ces moyens relativement au chariot d'une manière contrôlée.

FIG.1

FIG. 2

0 100 680

WATER

~8~

~9~

-351-

32

72

33

34

361

35

35a

14

18

23a

23

FIG. 3

28

19

6

6

15

37 36 16 17

15

23a

FIG.3A

0 100 680

2

FIG. 4

FIG. 5

FIG. 6

FIG. 6A

FIG. 7

FIG. 8